# EUROPÄISCHE PATENTSCHRIFT

(11) **EP 1 062 281 B1**
(45) Veröffentlichungstag und Bekanntmachung des Hinweises auf die Patenterteilung: **30.07.2003**
(21) Anmeldenummer: 99913250.9
(22) Anmeldetag: 11.03.1999
(51) Int. Cl.: C09C 1/00, C01F 17/00, C09C 3/06

(54) **SULFID- UND OXISULFIDPIGMENTE**
SULPHIDE AND OXYSULPHIDE PIGMENTS
PIGMENTS A SULFURE ET A OXYSULFURE

(30) Priorität: 11.03.1998 DE 19810317
(43) Veröffentlichungstag der Anmeldung: 27.12.2000
(73) Patentinhaber: MERCK PATENT GmbH, 64293 Darmstadt (DE)
(72) Erfinder: PFAFF, Gerhard, D-64839 Münster (DE); KUNTZ, Matthias, D-64342 Seeheim (DE); VOGT, Reiner, D-64289 Kranichstein (DE); RIDDLE, Rodney, Poole, Dorset BH 12 AG (GB); SCHOEN, Sabine, D-64287 Darmstadt (DE); WEBER, Wolf-Dietrich, D-64354 Reinheim (DE)
(86) Internationale Anmeldenummer: EP9901572
(87) Internationale Veröffentlichungsnummer: WO99046336

(56) Entgegenhaltungen:
- EP-A- 0 620 254
- EP-A- 0 680 930
- FR-A- 2 755 971
- FR-A- 2 758 545
- US-A- 5 401 306

## Beschreibung

Die vorliegende Erfindung betrifft Sulfid- und Oxysulfidpigmente auf der Basis plättchenförmiger Substrate, die mit einem Sulfid bzw. Oxysulfid eines Seltenen Erdmetalls und/oder des Yttriums beschichtet sind, sowie deren Herstellung und Verwendung, insbesondere in Autolacken, Lacken, Farben, Kunststoffen und kosmetischen Formulierungen.

Seltene Erdmetallsulfid- und Yttriumsulfidpigmente ohne Träger sowie deren Verwendung in Kunststoffen, Anstrichstoffen und in der Kosmetik sind aus der EP 0 203 838 B1 bekannt. In der EP 0 545 746 B1 werden Pigmente beschrieben, die eine Zusammensetzung auf Basis eines Sesquisulfids eines Seltenen Erdmetalls bzw. des Yttriums aufweisen und gleichzeitig einen Dotierstoff enthalten.

In der EP 0 620 254 B1 dient ein Pigment auf Basis eines Seltenen Erdmetallsulfids bzw. des Yttriumsulfids als Träger, der mit einem transparenten Oxid, vorzugsweise einem Metalloxid, beschichtet wird.

Diese bekannten Seltenen Erdmetallsulfid- bzw. Yttriumsulfidpigmente sind zwar als Absorptionspigmente für viele Zwecke gut einsetzbar, sind aber wegen der fehlenden Interferenzfähigkeit und mangelndem Glanz nicht als Perlglanzpigmente anzusehen.

Aufgabe der vorliegenden Erfindung war es daher Seltene Erdmetallsulfid- bzw. -oxysulfid- und Yttriumsulfid- bzw. -oxysulfidpigmente mit gutem Deckvermögen und kräftigen Farbtönen bereitzustellen, welche ein breiteres Farbspektrum abdecken und gleichzeitig die Eigenschaften in bezug auf Interferenz fähigkeit und Glanz von Perlglanzpigmenten aufweisen.

Überraschenderweise wurde nun gefunden, daß man durch Beschichtung von plättchenförmigen Substraten mit Sulfiden bzw. Oxysulfiden der Seltenen Erdmetalle (Lanthanide) sowie des Yttriums Pigmente mit interessanten koloristischen und funktionellen Eigenschaften erhält.

Auf den plättchenförmigen Substraten können gleichmäßige Sulfid- bzw. Oxysulfidschichten von Seltenen Erdmetallen sowie von Yttrium aufgebracht werden, die einen hohen Glanz aufweisen und dem Pigment eine attraktive Pulverfarbe verleihen, und die gegebenenfalls die Interferenzfarben dünner Plättchen erzeugen können.

Gegenstand der Erfindung sind gemäß Anspruch 1 somit Sulfid- und Oxysulfidpigmente auf der Basis von plättchenförmigen Substraten, dadurch gekennzeichnet, daß die Substrate mit einem Sulfid bzw. Oxysulfid eines oder mehreren Seltenen Erdmetallen und/oder des Yttriums, der Formel M₂S₃ bzw. M₂S₃₋ₓOₓ, in der M mindestens ein Element bedeutet, das aus der von Lanthaniden und Yttrium gebildeten Gruppe ausgewählt ist und 2,5 < x < 0,05 ist, beschichtet sind.

Gegenstand der Erfindung ist weiterhin ein Verfahren zur Herstellung der erfindungsgemäßen Pigmente gemäß Anspruch 9 sowie die Verwendung dieser Pigmente in Formulierungen wie Farben, Lacke, Druckfarben, Kunststoffen und Kosmetika.

Die Substrate werden mit einem Sulfid der Seltenen Erdmetalle oder des Yttriums mit der Formel M₂S₃, worin M mindestens ein aus der Gruppe gewähltes Element darstellt, die aus den Lanthaniden der Ordnungszahlen zwischen einschließlich 57 und 71 und Yttrium gebildet wird, beschichtet. Vorzugsweise bedeutet M₂S₃ ein Sesquisulfid des kubischen γ-Ce₂S₃ oder γ-La₂S₃. Es kommen aber auch Sulfidmischungen, wie γ-Ce₂S₃ und γ-La₂S₃, oder gemischte Sulfide, wie LaYS₃, in Frage. Die Beschichtungen können darüber hinaus aus Oxysulfiden der Formel M₂S₃₋ₓOₓ (2,5 < x < 0,05) bestehen.

Als plättchenförmiges Basissubstrat kommen alle dem Fachmann bekannten plättchenförmigen Materialien in Frage, die unter den Beschichtungsbedingungen stabil sind. Insbesondere sind hier zu nennen natürlicher und synthetischer Glimmer, Kaolin, Talkum, Vermiculit, TiO₂-, SiO₂-, Al₂O₃-Flakes, Glasplättchen, Graphit, Metallplättchen, Bismutoxidchlorid, plättchenförmiges Eisenoxid, LCPs (Liquid Crystal Polymer Pigmente), holographische Pigmente und andere plättchenförmige Materialien.

Bevorzugt wird Glimmer, wie z.B. Muskovit oder Phlogopit, eingesetzt. Als plättchenförmiges Substrat können aber auch Materialien eingesetzt werden, die bereits eine Metalloxidbeschichtung besitzen, insbesondere Glimmer- oder SiO₂-Plättchen mit ein oder mehreren Beschichtungen aus z.B. TiO₂, ZrO₂, SnO₂, Al₂O₃, SiO₂, ZnO oder Gemischen dieser Metalloxide.

Als Substratmaterialien kommen aber auch dünne Metallplättchen in Frage, die teilweise - wie z.B. bei Al-Plättchen - mit einer Schicht einer niedrigbrechenden, stabilisierenden Verbindung, wie Siliciumdioxid, umhüllt sind. Als Metallplättchen können neben Al-Plättchen auch Plättchen aus Ag, Ti, Cu/Zn und weiteren Metallen zur Anwendung kommen.

Die Größe dieser plättchenförmigen Substrate ist an sich nicht kritisch und es können daher Teilchen in der für die beabsichtigte Anwendung geeigneten Größe verwendet werden. In der Regel wird man das Substrat in Teilchengrößen von etwa 1 bis 200 µm, insbesondere etwa 5 bis 100 µm, einsetzen. Die Dicke der Teilchen liegt in der Regel bei etwa 0,1 bis 5 µm, insbesondere etwa 0,5 µm.

Die als Substrate verwendeten Ausgangsmaterialien sind bekannt und lassen sich nach bekannten Verfahren herstellen. Glimmerteilchen der gewünschten Größenordnung lassen sich durch nasses oder trockenes Vermahlen von Glimmer und nachfolgendes Klassieren gewinnen. Metalloxidbeschichtete Materialien, insbesondere metalloxidbeschichtete Glimmerplättchen, sind sowohl käuflich erhältlich, z.B. von der Fa. Merck KGaA, Darmstadt, als lriodin®-Perlglanzpigment oder sind nach bekannten Verfahren herstellbar. Solche Verfahren sind z.B. beschrieben in den Patenten bzw. Patentanmeldungen US 3,087,828, US 3,087,829, DE 19 59 998, DE 20 09 566, DE 22 14 545, DE 22 44 298, DE 23 13 331, DE 25 22 572, DE 31 37 808, DE 31 37 809, DE 31 51 343, DE 31 51 354, DE 31 51 355, DE 32 11 602, DE 32 35 107, WO 93/08237 und EP 0 763 573.

Die erfindungsgemäßen Pigmente werden hergestellt, indem man zu einer wäßrigen Suspension eines plättchenförmigen Substrats eine Salzlösung eines Seltenen Erdmetalls und/oder des Yttriums und gegebenenfalls Oxalsäure gibt, wobei der pH-Wert der Suspension gegebenenfalls durch gleichzeitige Zugabe einer Base weitgehend konstant gehalten wird in einem Bereich, der eine Hydrolyse des zugegebenen Salzes bewirkt, und das auf diese Weise mit einem Oxid bzw. Oxidhydrat oder Oxalat beschichtete Pigment abtrennt, wäscht, trocknet, vorzugsweise 10 min. - 1,5 h bei 80 - 150 °C, und glüht, vorzugsweise bei 400 - 900 °C. Zuletzt wird das Produkt im H₂S-Gasstrom oder im CS₂- bzw. H₂S/CS₂-Gasstrom unter Inertgas bei Temperaturen von 550 bis 1200 °C, vorzugsweise bei 800 bis 1000 °C, 10 min. bis 2 h calciniert, wobei das Oxalat oder Oxid des Seltenen Erdmetalls und/oder Yttriums in das Sulfid bzw. Oxysulfid überführt wird.

Es besteht auch die Möglichkeit die Umsetzung mit H₂S bzw. CS₂ in einem Wirbelbettreaktor (CVD-Prozeß) durchzuführen.

Zur Durchführung der CVD-Variante empfiehlt sich wie allgemein für CVD-Verfahren die Verwendung eines Wirbelschichtreaktors oder Röhrenofens. Die zu beschichtenden Substratteilchen werden im Reaktor z. B. unter Fluidisierung (Verwirbelung) mit einem inerten Wirbelgas wie N₂ oder Argon auf die gewünschte Reaktionstemperatur (in der Regel 400 bis 900 °C, bevorzugt 650 bis 850 °C) erhitzt. Der elementare Schwefel oder H₂S bzw. CS₂ wird dann mit Hilfe inerter Trägergasströme (vorteilhaft Teilströme des Wirbelgases) aus vorgeschalteten Verdampfergefäßen über getrennte Düsen eingeleitet, wobei die Schwefelkonzentration zweckmäßigerweise bei 0,5 bis 5 Vol.%, vorzugsweise ≤ 2 Vol. %, bezogen auf die Gesamtgasmenge im Reaktor, gehalten wird.

Neben schwefelhaltigen Verbindungen sind als bevorzugte Schwefellieferanten insbesondere Schwefelwasserstoff und elementarer Schwefel zu nennen.

Beim Einsatz von elementarem Schwefel geht man verfahrenstechnisch zweckmäßigerweise so vor, daß man fein gemahlenes Schwefelpulver, etwa 1 bis 4h inertisiert und anschließend unter Ausschluß von Sauerstoff auf die Reaktionstemperatur, i. a. bei 400-1200 °C, vorzugsweise bei 400-900 °C, insbesondere bei 600-850 °C, erhitzt.

Durch Abscheidung von Seltenen Erdmetalloxid- bzw. -oxidhydrat-Schichten oder Yttriumoxid- bzw. Yttriumoxidhydrat-Schichten in Gegenwart eines oder mehrerer Dotierstoffe, z.B. ausgewählt aus der Gruppe der Erdalkali- und/oder Alkalimetalle, auf den plättchenförmigen Substraten, können besonders glatte, stabile, definierte und farbstarke Seltene Erdmetallsulfidschichten bzw. Yttriumsulfidschichten erzeugt werden. Der Dotierstoff liegt in Form eines Einschlusses im kristallinen Gitter der Sulfidschicht M₂S₃ bzw. der Oxysulfidschicht M₂S₃₋ₓOₓ vor. Das Dotierelement kann allein oder in Mischungen unter den Salzen der Alkaliund/oder Erdalkalimetalle ausgewählt werden, vorzugsweise wird Natrium oder Kalium verwendet. Der Dotierstoff wird bei der Beschichtung der plättchenförmigen Substrate mit der Oxid- bzw. Oxidhydratschicht in fester Form oder in wäßriger Lösung bezogen auf das Substrat in Mengen von 0,02 bis 2,0 Gew.%, vorzugsweise 0,05 bis 0,5 Gew.%, zugesetzt. Der Anteil an Dotierstoff in der Sulfidschicht bzw. der Oxysulfidschicht beträgt 0,01 bis 1,0 Gew.%, vorzugsweise 0,05 bis 0,5 Gew.%.

Besonders bevorzugt sind plättchenförmige Substrate, die eine Cersulfidschicht bzw. Oxysulfidschicht aufweisen und mit Natrium dotiert sind.

Die Sulfidschicht bzw. Oxysulfidschicht der Seltenen Erdmetalle bzw. des Yttriums kann je nach dem gewünschten Effekt Dicken bis zu etwa 400 nm, vorzugsweise 10 bis 300 nm, aufweisen. Dabei werden in der Regel Gehalte an Seltenen Erdmetallsulfiden bzw. an Yttriumsulfiden bzw. den entsprechenden Oxysulfiden erreicht, die bezogen auf das Substrat etwa 1 bis 400 Gew.%, insbesondere 5 bis 300 Gew.%, ausmachen. Je nach der Schichtdicke der Sulfid- bzw. Oxysulfidschicht werden dabei Interferenzfarben erzielt, die mit wachsender Schichtdicke von silber über gold, rot, violett und blau bis hin zu grün und schließlich Interferenzfarben höherer Ordnung gehen.

Bei Pigmenten, die neben einer Seltenen Erdmetallsulfid- bzw. Yttriumsulfidschicht bzw. einer entsprechenden Oxysulfidschicht weitere Schichten (vorzugsweise 3 bis 7 Schichten) aus hoch- und niedrigbrechenden Materialien (vorzugsweise Oxiden) und gegebenenfalls semitransparenten Metallen enthalten (Multischichtpigmente), können sehr starke winkelabhängige Farbeffekte (Farb-Flop, Goniochromatizität) erhalten werden.

Es ist weiterhin möglich, das fertige Pigment einer Nachbeschichtung oder Nachbehandlung zu unterziehen, die die Licht-, Wetter- und chemische Stabilität weiter erhöht, oder die Handhabung des Pigments, insbesondere die Einarbeitung in unterschiedliche Medien, erleichtert. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage.

Die zusätzlich aufgebrachten Stoffe machen nur etwa 0,1 bis 5 Gew.-%, vorzugsweise etwa 0,5 bis 3 Gew.-%, des gesamten Pigmentes aus.

Die erfindungsgemäßen Pigmente stellen eine wesentliche Bereicherung der Technik dar. Durch die in das orange bis rot gehende Pulverfarbe und die beliebig erzeugbare Interferenzfarbe ergeben sich äußerst interessante Effekte, die zu vielfältigen Anwendungen ausgenutzt werden können, wobei insbesondere bei Substraten, die bereits selbst eine Interferenzfarbe aufweisen, diese durch die Sulfidschicht bzw. Oxysulfidschicht verstärkt und variiert werden kann. Anwendungsgebiete ergeben sich sowohl in der Kosmetik, wo die erfindungsgemäßen Pigmente z.B. in Nagellacken, in Make-up, Gelen, Pudern, Salben, Emulsionen, Fettstiften und anderen Mitteln in Konzentrationen von in der Regel 0,1 bis 80 Gew.% eingesetzt werden können, als auch in der Technik, z.B. zur Pigmentierung von Farben, Lacken, Druckfarben oder Kunststoffen.

Kunststoffe enthaltend die erfindungsgemäßen Pigmente in Mengen von 0,1 bis 10 Gew.%, vorzugsweise 0,1 bis 5 Gew.%, sind hervorragend für die Lasermarkierung, z.B. mit einem CO₂- oder Nd-YAG-Laser, geeignet. Die erhaltenen Markierungen-zeichnen sich durch ihren hohen Kontrast und ihre Kantenschärfe aus.

Die nachfolgenden Beispiele sollen die Erfindung erläutern, ohne sie zu begrenzen:

### Beispiele

### Beispiel 1

100 g Glimmer der Teilchengröße 10 - 60 µm werden in 2 I Wasser suspendiert. Bei einem pH-Wert von 5,5 und 60 °C wird eine Lösung von 26 g Ce(SO₄)₂·4H₂O in 420 ml verdünnter Schwefelsäure zudosiert, wobei der pH-Wert durch gleichzeitiges Zutropfen einer 25 %igen Natronlauge konstant gehalten wird. Man läßt 0,5 h rühren, trennt das Produkt ab, wäscht mit Wasser, trocknet 0,5 h bei 80 °C, calciniert zunächst 0,5 h bei 500 °C im Argonstrom und zuletzt 1 h bei 950 °C im H₂S/Argon-Strom (10 l/h H₂S).

Das erhaltene Pigment zeichnet sich durch seine intensive orange Farbe und einen hohen Glanz aus.

### Beispiel 2

Analog Beispiel 1 werden 100 g SiO₂-Flakes der Teilchengröße 5 bis 40 µm mit Cersulfid beschichtet. Das erhaltene Pigment zeichnet sich durch eine im Vergleich zum im Beispiel 1 beschriebenen Pigment noch intensivere orange Farbe und verstärkten Glanz aus.

### Beispiel 3

Analog Beispiel 1 werden 100 g Iriodin® 103 Rutil Sterling Silver (mit TiO₂ beschichtetes Glimmerpigment der Teilchengröße 10 bis 50 µm der Fa Merck KGaA, Darmstadt) mit Cersulfid beschichtet. Das erhaltene Pigment weist eine intensive orange-goldene Farbe und einen hohen Glanz auf.

### Beispiel 4

a) 100 g Glimmer der Teilchengröße 10-60 µm werden in 2 I VE-Wasser suspendiert und unter ständigem Rühren auf 75 °C erhitzt. Der pH-Wert der Suspension wird mit verdünnter Salzsäure (20 %ig) auf 6,0 eingestellt. Während der Zugabe von 650 ml einer wäßrigen CeCl₃-Lösung (108 g CeCl₃·7H₂O in 600 g VE-Wasser) wird der pH-Wert mit 20 %-iger Natronlauge auf 6,0 konstant gehalten, Nach beendeter Zugabe wird zur Vervollständigung der Fällung nachgerührt. Das erhaltene Pigment wird abfiltriert, gewaschen und bei 110 °C getrocknet. Das mit CeO₂ beschichtete Glimmerpigment ist von weißer Pulverfarbe und zeigt eine schwach silberne Interferenz.
b) 10 g Produkt aus Beispiel 4a) werden in einem Quarzschiffchen in einen Röhrenofen mit Quarzrohr plaziert. Der Ofen wird unter Argon auf 650 °C (200 cm³/min) erhitzt. Danach wird zusätzlich H₂S-Gas 1h durch das System geleitet. Nach beendeter Reaktion läßt man das Produkt unter Inertisierung (Argon) auf Raumtemperatur abkühlen. Man erhält ein hellrotes Pigment mit einer γ-Ce₂S₃-Schicht.

### Beispiel 5

10 g Produkt aus Beispiel 4a) werden analog Beispiel 4b) in einem Drehrohrofen unter Stickstoff (200 cm³/min) auf 750 °C erhitzt. Anschließend wird zusätzlich durch das System für 5 h ein H₂S-Strom (200cm³/min) geleitet. Nach beendeter Reaktion läßt man das Produkt unter Inertisierung (N₂) auf Raumtemperatur abkühlen. Die so erhaltenen mit Ceroxysulfid (Ce₂OS₂) beschichteten Pigmente besitzen eine grüne Körperfarbe und einen hohen Glanz.

### Beispiel 6

a) Zu einer Glimmersuspension (100 g Glimmer der Teilchengröße 10 - 60 µm) werden getrennt, aber gleichzeitig eine CeCl₃-Lösung (68,4 g CeCl₃ · 7 H₂O mit VE-Wasser auf 700 ml aufgefüllt) und eine Oxalsäurelösung (H₂C₂O₄ · 2H₂O mit VE-Wasser auf 700 ml aufgefüllt) bei 75 °C zudosiert. Nach beendeter Zugabe werden die Pigmente gewaschen, bei 110 °C getrocknet und bei 800 °C geglüht.
b) 10 g der mit Ceroxalat beschichteten Glimmerpigmente werden im Röhrenofen in einem Quarzschiffchen in einem N₂-Strom (200 cm³/min) auf 900 °C erhitzt. Anschließend wird zusätzlich für 4 h bei 900 °C ein H₂S-Strom (200 m³/min) durch das System geleitet. Nach beendeter Reaktion läßt man das Produkt unter inertisierung (N₂) auf Raumtemperatur abkühlen. Die so hergestellten rot-violetten Pigmente weisen eine β-Ce₁₀S₁₄O-Beschichtung auf.

## Patentansprüche

1. Sulfid- und Oxysulfidpigmente auf der Basis von plättchenförmigen Substraten, **dadurch gekennzeichnet, daß** das Substrat mit Yttriumund/oder einem oder mehreren Seltenen Erdmetall-Sulfiden der Formel M₂S₃ bzw. den entsprechenden Oxysulfiden der Formel M₂S₃₋ₓOₓ, in der M mindestens ein Element bedeutet, das aus der von den Lanthaniden und Yttrium gebildeten Gruppe ausgewählt ist, und 2,5 < x < 0,05 ist, beschichtet ist.

2. Pigmente nach Anspruch 1, **dadurch gekennzeichnet, daß** das Seltene Erdmetallsulfid bzw. -oxysulfid ein Sulfid bzw. Oxysulfid des Cers, des Neodyms, des Praseodyms, des Samariums, des Gadoliniums, des Terbiums, des Dysprosiums, des Erbiums oder des Thuliums ist.

3. Pigmente nach Anspruch 1 oder 2, **dadurch gekennzeichnet, daß** das plättchenförmige Substrat unbeschichtete oder ein- oder mehrfach beschichtete Glimmerplättchen, SiO₂-, TiO₂-, Al₂O₃- Flakes, Glasplättchen, Graphit, Bismutoxidchlorid oder plättchenförmige Metalloxide sind.

4. Pigmente nach einem der Ansprüche 1 bis 3, **dadurch gekennzeichnet, daß** die Masse an Seltenen Erdmetallsulfid bzw. -oxysulfid bezogen auf das Gesamtpigment 1 bis 400 Gew.% beträgt.

5. Pigmente nach einem der Ansprüche 1 bis 4, **dadurch gekennzeichnet, daß** die Seltene Erdmetallsulfidschicht bzw. -oxysulfidschicht mit ein oder mehreren Alkali- und/oder Erdalkalimetallen dotiert ist.

6. Pigmente nach Anspruch 5, **dadurch gekennzeichnet, daß** das Dotierelement in Mengen von 0,01 bis 1,0 Gew.% bezogen auf die Sulfidschicht- bzw. Oxysulfidschicht enthalten ist.

7. Pigmente nach Anspruch 5 oder 6, **dadurch gekennzeichnet, daß** das Dotierelement Natrium oder Kalium ist.

8. Pigmente nach einem der Ansprüche 1 bis 7, **dadurch gekennzeichnet, daß** ein plättchenförmiges Substrat eine Schicht aus mit Natrium dotiertem Cersulfid Ce₂S₃ aufweist.

9. Verfahren zur Herstellung von Pigmenten nach Anspruch 1, **dadurch gekennzeichnet, daß** man zu einer wäßrigen Suspension eines plättchenförmigen Substrats eine Lösung eines Salzes eines Seltenen Erdmetalls und/oder Yttriums und gegebenenfalls eine Oxalsäurelösung gibt und gegebenenfalls zu der Suspension einen Dotierstoff in fester Form oder als wäßrige Lösung zugibt, wobei der pH-Wert der Suspension gegebenenfalls durch gleichzeitige Zugabe einer Base weitgehend konstant gehalten wird in einem Bereich, der eine Hydrolyse des zugegebenen Salzes bewirkt, und das auf diese Weise mit einem Oxid bzw. Oxidhydrat oder Oxalat beschichtete Pigment abtrennt, wäscht, trocknet, und gegebenenfalls zunächst bei 400 bis 800 °C glüht und zuletzt in Gegenwart von schwefelhaltigen Verbindungen, CS₂, Schwefel oder Schwefelwasserstoff bei 550 bis 1200 °C in das Sulfid oder Oxysulfid überführt.

10. Verfahren nach Anspruch 9, **dadurch gekennzeichnet, daß** der Dotierstoff ein oder mehrere Alkali- und/oder Erdalkalisalze ist (sind).

11. Verwendung der Pigmente nach Anspruch 1 in Formulierungen wie Autolacken, Farben, Lacken, Druckfarben, Kunststoffen und in Kosmetika.

12. Formulierungen enthaltend Pigmente nach'einem der Ansprüche 1 bis 8.

## Claims

1. Sulfide and oxysulfide pigments based on platelet-shaped substrates, **characterised in that** the substrate is coated with yttrium sulfides and/or one or more rare-earth metal sulfides of the formula M₂S₃ or the corresponding oxysulfides of the formula M₂S₃₋ₓOₓ, in which M is at least one element selected from the group formed by the lanthanides and yttrium, and 2.5 < x < 0.05.

2. Pigments according to Claim 1, **characterised in that** the rare-earth metal sulfide or oxysulfide is a sulfide or oxysulfide of cerium, neodymium, praseodymium, samarium, gadolinium, terbium, dysprosium, erbium or thulium.

3. Pigments according to Claim 1 or 2, **characterised in that** the platelet-shaped substrate comprises uncoated or mono- or multicoated mica platelets, SiO₂ flakes, TiO₂ flakes, Al₂O₃ flakes, glass platelets, graphite, bismuth oxide chloride or platelet-shaped metal oxides.

4. Pigments according to one of Claims 1 to 3, **characterised in that** the mass of rare-earth metal sulfide or oxysulfide, based on the total pigment, is from 1 to 400% by weight.

5. Pigments according to one of Claims 1 to 4, **characterised in that** the rare-earth metal sulfide layer or oxysulfide layer is doped with one or more alkali and/or alkaline earth metals.

6. Pigments according to Claim 5, **characterised in that** the doping element is present in amounts of from 0.01 to 1.0% by weight, based on the sulfide layer or oxysulfide layer.

7. Pigments according to Claim 5 or 6, **characterised in that** the doping element is sodium or potassium.

8. Pigments according to one of Claims 1 to 7, **characterised in that** a platelet-shaped substrate has a layer of sodium-doped cerium sulfide Ce₂S₃.

9. Process for the preparation of pigments according to Claim 1, **characterised in that** a solution of a salt of a rare-earth metal and/or of yttrium and, if desired, an oxalic acid solution are added to an aqueous suspension of a platelet-shaped substrate, and, if desired, a dopant in solid form or in the form of an aqueous solution is added to the suspension, where the pH of the suspension is, if necessary, kept substantially constant in a range which effects hydrolysis of the added salt by simultaneous addition of a base, and the pigment coated in this way with an oxide or oxide hydrate or oxalate is separated off, washed, dried and, if desired, firstly calcined at from 400 to 800°C and finally converted into the sulfide or oxysulfide at from 550 to 1200°C in the presence of sulfur-containing compounds, CS₂, sulfur or hydrogen sulfide.

10. Process according to Claim 9, **characterised in that** the dopant is one or more alkali and/or alkaline earth metal salts.

11. Use of the pigments according to Claim 1 in formulations such as automotive finishes, paints, coatings, printing inks, plastics and in cosmetics.

12. Formulations comprising pigments according to one of Claims 1 to 8.

## Revendications

1. Pigments aux sulfures et oxysulfures à base de substrats sous forme lamellaire, **caractérisés en ce que** le substrat est revêtu par du sulfure d'yttrium et/ou par un ou plusieurs sulfures des métaux des terres rares de formule M₂S₃ ou par les oxysulfures correspondants de formule M₂S₃₋ₓOₓ dans laquelle M représente au moins un élément choisi dans le groupe constitué par les lanthanides et l'yttrium et 2,5 < x < 0,05.

2. Pigments selon la revendication 1, **caractérisés en ce que** le sulfure ou l'oxysulfure des métaux des terres rares est un sulfure ou un oxysulfure de cérium, de néodyme, de praséodyme, de samarium, de gadolinium, de terbium, de dysprosium, d'erbium ou de thulium.

3. Pigments selon la revendication 1 ou 2, **caractérisés en ce que** le substrat sous forme lamellaire est constitué de lamelles de mica, de lamelles de SiO₂, TiO₂, Al₂O₃, de lamelles de verre, de graphite, d'oxychlorure de bismuth ou d'oxydes métalliques sous forme lamellaire, non revêtus ou comportant un ou plusieurs revêtements.

4. Pigments selon l'une des revendications 1 à 3, **caractérisés en ce que** le poids en sulfures ou oxysulfures des métaux des terres rares rapporté au poids total du pigment est compris entre 1 et 400 % en poids.

5. Pigments selon l'une des revendications 1 à 4, **caractérisés en ce que** la couche de sulfure ou d'oxysulfure des métaux des terres rares est dopée avec un ou plusieurs métaux alcalins et/ou alcalino-terreux.

6. Pigments selon la revendication 5, **caractérisés en ce que** l'élément dopant est contenu en une quantité comprise entre 0,01 et 1,0 % en poids, rapporté à la couche de sulfure ou d'oxysulfure.

7. Pigments selon la revendication 5 ou 6, **caractérisés en ce que** l'élément dopant est le sodium ou le potassium.

8. Pigments selon l'une des revendications 1 à 7, **caractérisés en ce que** le substrat sous forme lamellaire présente une couche de sulfure de cérium Ce₂S₃ dopé avec du sodium.

9. Procédé pour la préparation des pigments selon la revendication 1, **caractérisé en ce que** l'on additionne à une suspension aqueuse d'un substrat sous forme lamellaire une solution d'un sel d'un métal de terre rare et/ou d'yttrium et éventuellement une solution d'acide oxalique, **en ce que** l'on ajoute éventuellement à la suspension un dopant sous forme solide ou sous forme de solution aqueuse, le pH de la suspension étant dans une large mesure maintenu constant, éventuellement par l'addition simultanée d'une base, dans un intervalle provoquant l'hydrolyse du sel additionné, **en ce que** l'on sépare le pigment ainsi revêtu d'un oxyde ou d'un oxyde hydraté ou d'un oxalate, **en ce qu'**on le lave, **en ce qu'**on le sèche et éventuellement **en ce que** tout d'abord on le calcine à une température comprise entre 400 et 800°C et **en ce que** finalement on le transforme en présence de composés soufrés, de CS₂, de soufre ou d'hydrogène sulfuré à une température comprise entre 550 et 1200°C, en sulfure ou oxysulfure.

10. Procédé selon la revendication 9, **caractérisé en ce que** le dopant est constitué par un ou plusieurs sels alcalins et/ou alcalino-terreux.

11. Utilisation des pigments selon la revendication 1 dans des formulations telles que peintures pour véhicules, encres, vernis, encres d'imprimerie, matières plastiques et dans les cosmétiques.

12. Formulations contenant les pigments selon l'une des revendications 1 à 8.
